# EUROPEAN PATENT APPLICATION

(11) **EP 2 233 239 A2**
(43) Date of publication of application: **29.09.2010**
(21) Application number: 10250319.0
(22) Date of filing: 23.02.2010
(51) Int. Cl.: B23K 20/18, F01D 5/12, B21D 26/02

(54) **A method of manufacturing a component comprising an internal structure**

(30) Priority: 18.03.2009 GB 0904571
(71) Applicant: Rolls-Royce Plc, London Greater London SW1E 6AT (GB)
(72) Inventor: Strother, Oliver Michael, Leeds, LS16 7LP (GB)
(74) Representative: Roberts, Nicholas John

(57) **Abstract**

A method of manufacturing a component (10) by superplastic forming and diffusion bonding a first layer (12), a second layer (14), a first membrane (16), and a second membrane (18), the first and second membranes (16, 18) being disposed between the first and second layers (12, 14) with the first membrane (16) adjacent the first layer (12) and the second membrane (18) adjacent the second layer (14), wherein the method comprises: applying a stop-off material in a first predetermined pattern between the first layer (12) and the first membrane (16) so as to prevent a diffusion bond from forming between the first layer (12) and the first membrane (16) across regions defined by said first predetermined pattern; applying the stop-off material in a second predetermined pattern between the second layer (14) and the second membrane (18) so as to prevent a diffusion bond from forming between the second layer (14) and the second membrane (18) across regions defined by said second predetermined pattern; and providing a damping material (40) between the first and second membranes.

## Description

This invention relates to a method of manufacturing a component comprising an internal structure, and particularly but not exclusively relates to applications of the method in hollow aerofoil components for turbomachines.

It is known to manufacture hollow metallic aerofoils for example to be used as blades in a jet engine, and in particular fan blades for a turbomachine, by superplastic forming and diffusion bonding metallic panels, the panels forming pressure and suction surfaces of the blade. Such structures are widely used in the civil aerospace industry, for example in wide-chord fan blades, and may also be used in blisks (i.e. bladed disks), particularly in military applications. The metallic panels may include elementary metal, metal alloys and metal matrix composites and at least one of the metallic panels must be capable of superplastic extension. In one known process the surfaces of the panels to be joined are cleaned, and at least one surface of one or more of the panels is coated in preselected areas with a stop-off material to prevent diffusion bonding. The panels are arranged in a stack and the edges of the panels are welded together, except where a pipe is welded to the panels, to form an assembly. The pipe enables a vacuum, or inert gas pressure, to be applied to the interior of the assembly. The assembly is placed in an autoclave and heated so as to "bake out" the binder from the material to prevent diffusion bonding. The assembly is then evacuated, using the pipe, and the pipe is sealed. The sealed assembly is placed in a pressure vessel and is heated and pressed to diffusion bond the panels together to form an integral structure. Diffusion bonding occurs when two mat surfaces are pressed together under temperature, time and pressure conditions that allow atom interchange across the interface. The first pipe is removed and a second pipe is fitted to the diffusion bonded assembly at the position where the first pipe was located. The integral structure is located between appropriately shaped dies and is placed within an autoclave. The integral structure and dies are heated and pressurised fluid is supplied through the second pipe into the interior of the integral structure to cause at least one of the panels to be superplastically formed to produce an article matching the shape of the dies.

In addition to the hollow assembly just described, it is also known to insert a membrane between the metallic panels prior to the above described process. The location of diffusion bonds between the membrane and the adjacent panels can be controlled by applying the stop-off material to preselected areas on each side of the membrane (or respective panels). When the aerofoil is subsequently expanded, the membrane adheres to the panels where the diffusion bond is allowed to form and thereby provides an internal structure. The internal structure is provided to increase the strength and stiffness of the aerofoil and also to prevent "panting" of the panels.

The assembly may be filled or part filled by a suitable material to provide damping of the structure and therefore to reduce vibration. A suitable material may be one which possesses viscoelastic properties. Viscoelasticity is a property of a solid or liquid which when deformed exhibits both viscous and elastic behaviour through the simultaneous dissipation and storage of mechanical energy. A known method is to introduce a viscoelastic material, for example a Huntsman™ syntactic damping paste or a similar product, into the cavity by injecting or otherwise introducing the material into some or all of the cavity. This technique may be applied in a hollow assembly wherein the cavity is smooth walled with no internal structure, see GB2371095 for example. In this configuration the viscoelastic material is restrained solely by the bond between the viscoelastic material and the walls of the cavity. If this bond is not sufficient to retain the viscoelastic material during working conditions, in particular due to centrifugal loading, then, since the viscoelastic material is a parasitic mass which is unable to support its own weight, the hydrostatic load of the unrestrained material will cause the blade to fail rapidly. Accordingly, the consequences of failure of this bond are severe. It is therefore desirable to provide some form of means for retaining and restraining the viscoelastic material. An internal structure may be used to provide such a restraining or retaining effect on the injected material. However, by providing a rigid internal structure the benefits of damping the aerofoil may be reduced as the aerofoil is less flexible as a result of the internal structure. This may lead to additional problems where the aerofoil prematurely fatigues or cracks as a result of the reduced flexibility. Other configurations use internal ribs, which may be attached to alternate interior walls of the aerofoil but which are not connected to one another, see for example patent application number GB0713699.7. This configuration permits damping of the assembly whilst the re-entrant features still provide a means of retaining the injected material. However, the non-re-entrant features do not provide significant retention of the viscoelastic material against the centrifugal load, since the nature of viscoelastic materials results in a tendency to flow when loaded in tension.

Furthermore, the use of an internal structure to physically restrain the viscoelastic material inevitably adds weight to the aerofoil and thus increases the stresses on the aerofoil, in particular at the root of the aerofoil. This increases the blade off energy if the blade were to fail, which must be taken into account when designing the blade retention system. In addition the provision of complex internal structures increases manufacturing costs and lead times. It is therefore desirable to provide an improved method of restraining a viscoelastic material within a cavity which addresses some or all of the above problems associated with the prior art methods.

According to a first aspect of the present invention there is provided a method of manufacturing a component by superplastic forming and diffusion bonding a first layer, a second layer, a first membrane, and a second membrane, the first and second membranes being disposed between the first and second layers with the first membrane adjacent the first layer and the second membrane adjacent the second layer, wherein the method comprises: applying a stop-off material in a first predetermined pattern between the first layer and the first membrane so as to prevent a diffusion bond from forming between the first layer and the first membrane across regions defined by said first predetermined pattern; applying the stop-off material in a second predetermined pattern between the second layer and the second membrane so as to prevent a diffusion bond from forming between the second layer and the second membrane across regions defined by said second predetermined pattern; placing the first and second layers and the first and second membranes between appropriately shaped dies; heating the first and second layers, the first and second membranes and dies; and supplying a pressurised fluid between the first layer and first membrane, first membrane and second membrane, and second membrane and second layer to cause at least one of the first and second layers and first and second membranes to be superplastically formed such that a space is provided between the first and second membranes.; and providing a viscoelastic damping material in the space between the first and second membranes.

The method may further comprise applying the stop-off material between the first and second membranes so as to prevent a diffusion bond from forming across a substantial portion between the first and second membranes.

The method may further comprise heating and pressing the first and second layers and the first and second membranes to diffusion bond the first and second layers and the first and second membranes together to form an integral structure.

The method may further comprise forming the component so that a space between the first and second membranes is provided. The method may further comprise injecting the damping material into the space between the first and second membranes.

The first and second membranes may be aligned with external surfaces of the layers on inflation to provide a space that is also aligned to the external surfaces of the layers. The opposing bounding surfaces of the space may, where the component is an aerofoil, hydrofoil or other lift generating device, substantially follow the contours of the pressure and suction surfaces.

The method may further comprise providing one or more depressions on an outer surface of one or more of the first and second layers. The first predetermined pattern of stop-off material may overlap with the one or more depressions in the first layer. The second predetermined pattern of stop-off material may overlap with the one or more depressions in the second layer.

The method may further comprise forming one or more of the first and second layers so that the outer surface depressions may be at least partially filled in. The method may further comprise forming one or more of the first and second layers so that the outer surface depressions may be filled in such that the outer surface has a substantially smooth finish. The outer surface depressions may be filled in by material in the one or more of the first and second layers surrounding the depression such that corresponding recesses may be formed on an inner surface of the one or more of the first and second layers.

The method may further comprise arranging one or more of the first and second predetermined patterns so that one or more cavities may be formed between the first layer and first membrane and/or second layer and second membrane. The one or more cavities may comprise the recesses formed on the inner surface of the one or more or the first and second layers.

The component may be an aerofoil structure for a turbomachine. The component may be a compressor fan blade.

According to a second aspect of the present invention there is provided a turbomachine having a component manufactured by superplastic forming and diffusion bonding a first layer, a second layer, a first membrane, and a second membrane, the first and second membranes being disposed between the first and second layers with the first membrane adjacent the first layer and the second membrane adjacent the second layer, wherein the method comprises: applying a stop-off material in a first predetermined pattern between the first layer and the first membrane so as to prevent a diffusion bond from forming between the first layer and the first membrane across regions defined by said first predetermined pattern; applying the stop-off material in a second predetermined pattern between the second layer and the second membrane so as to prevent a diffusion bond from forming between the second layer and the second membrane across regions defined by said second predetermined pattern; and providing a damping material between the first and second membranes.

According to a third aspect of the present invention there is provided an aerofoil structure for a turbomachine comprising a first layer, a second layer, a first membrane, and a second membrane, the first and second membranes being disposed between the first and second layers with the first membrane adjacent the first layer and the second membrane adjacent the second layer, wherein the component comprises: one or more cavities between the first layer and first membrane and/or second layer and second membrane; a space between the first and second membranes; and a damping material provided in the space between the first and second membranes.

According to a fourth aspect of the present invention there is provided a method of manufacturing a component by superplastic forming and diffusion bonding a first layer, a second layer, a first membrane, and a second membrane, the first and second membranes being disposed between the first and second layers with the first membrane adjacent the first layer and the second membrane adjacent the second layer, wherein the method comprises: applying a stop-off material in a first predetermined pattern between the first layer and the first membrane so as to prevent a diffusion bond from forming between the first layer and the first membrane across regions defined by said first predetermined pattern; applying the stop-off material in a second predetermined pattern between the second layer and the second membrane so as to prevent a diffusion bond from forming between the second layer and the second membrane across regions defined by said second predetermined pattern; and providing one or more depressions on an outer surface of one or more of the first and second layers; wherein the first predetermined pattern of stop-off material overlaps with the one or more depressions in the first layer and/or the second predetermined pattern of stop-off material overlaps with the one or more depressions in the second layer.

For a better understanding of the present invention, and to show more clearly how it may be carried into effect, reference will now be made, by way of example, to the accompanying drawings, in which:-
Figures 1(a)-(d) show a selection of the method steps involved in manufacturing a component according to an embodiment of the present invention;
Figure 2 shows a compressor fan blade according to an example application for the component of the present invention; and
Figure 3 shows a section of the fan blade corresponding to section A shown in Figure 2.

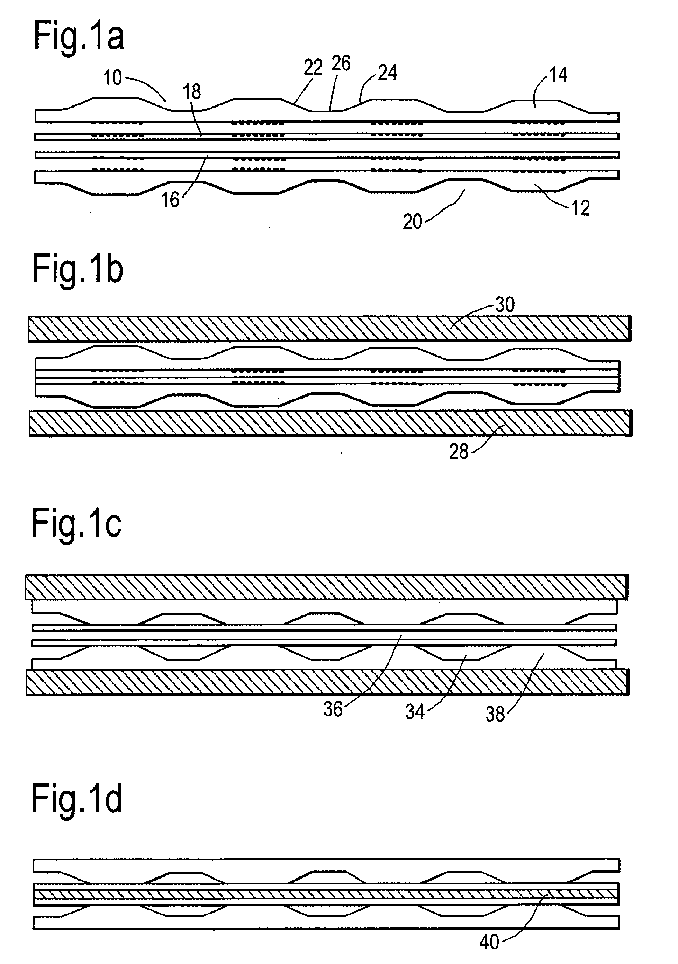

With reference to Figures 1(a)-(d), a component 10 according to the present invention comprises a first layer 12, a second layer 14, a first membrane 16 and a second membrane 18. The first and second membranes 16, 18 are disposed between the first and second layers 12, 14 with the first membrane 16 adjacent the first layer 12 and the second membrane 18 adjacent the second layer 14.

The first and second layers 12, 14 comprise one or more depressions 20 on the outer facing surfaces of the first and second layers 12, 14. By contrast, the inner facing surfaces of the first and second layers 12, 14 are substantially smooth. The first and second membranes are also substantially smooth on each side and preferably are without any depressions or holes.

The depressions 20 comprise sidewalls 22, 24 and base 26. In the example shown in Figures 1(a) and 1(b), the interior angle defined by the sidewalls 22, 24 with respect to the outer facing fist layer 12 is obtuse. Alternatively, one or more of the sidewalls 22, 24 may be angled with respect to the outer facing surface of the first layer 12 with an acute or perpendicular interior angle. In a further alternative arrangement, the depressions 20 may not comprise the base 26 such that the depressions 20 resemble a triangular notch or wedge. The depressions extend in a longitudinal direction (i.e. into the page as shown in Figure 1).

Prior to bonding the first and second layers 12, 14 to the first and second membranes 16, 18 respectively, a stop-off material is applied in preselected areas between: the first layer 12 and first membrane 16; the first and second membranes 16, 18; and the second membrane 18 and second layer 14. The stop-off material prevents a diffusion bond from occurring between said layers across the preselected areas. The stop-off material is applied to the inner facing surface of the first layer 12 in regions opposing the depressions 20 in the outer facing surface of the first layer 12. In addition or alternatively, the stop-off material may be applied to corresponding regions on the surface of the first membrane 16 facing the first layer 12. Similarly, the stop-off material is applied to the inner facing surface of the second layer 14 in regions opposing the depressions 20 in the outer facing surface of the second layer 14. In addition or alternatively, the stop-off material may be applied to corresponding regions on the surface of the second membrane 18 facing the second layer 14. In other words, a diffusion bond is permitted between the first and second layers 12, 14 and first and second membranes 16, 18 respectively where the first and second layers 12, 14 are thickest (i.e. where there are no depressions in the first and second layers). The dots shown in Figures 1(a) and 1(b) represent where there is no stop off material and where a diffusion bond will occur.

Furthermore, the stop-off material is applied between the first and second membranes 16, 18 and is applied throughout so as to prevent a diffusion bond from occurring between the first and second membranes 16, 18. The stop-off material is applied to either or both of the first and second membranes 16, 18.

With reference to Figure 1(b) once the stop-off material has been applied, the layers are stacked together and heat and pressure are applied via dies 28, 30 such that a diffusion bond is formed between the respective layers, except that a diffusion bond is not formed where the stop-off material has been applied.

With reference to Figure 1(c) once the diffusion bonds have been formed between the respective layers, the component 10 is inflated and the component 10 may also be twisted into shape. Pressurised fluid (typically Argon) is supplied into the interior of the blade to cause at least one of the layers to be superplastically formed to produce a blade matching the shape of the dies. The pressurised fluid is applied between the first layer 12 and first membrane 16; the first and second membranes 16, 18; and the second membrane 18 and second layer 14. This ensures that the pressure either side of the first and second membranes is substantially equalised.

The high pressure fluid acting on the inner facing surfaces of the first and second layers 12, 14 is sufficient to cause the depressions 20 to be blown out. In other words, the first and second layers 12, 14 are deformed such that the outer facing surfaces of the first and second layers 20, 24 are substantially smooth with the depressions 20 having been transferred to the inner facing surfaces of the first and second layers. In doing so, one or more cavities 34 are formed between the first layer 12 and first membrane 16 and between the second layer 14 and second membrane 14. The cavities are separated by protrusions 38 on the inner facing surfaces of the first and second layers 12, 14. The protrusions 38 are formed by the depressions 20 effectively moving from the outer facing surface to the inner facing surfaces and it is the protrusions 38 that are diffusion bonded to the respective first and second layers 12, 14. The protrusions 38 and the cavities 34 extend in a longitudinal direction (i.e. into the page as shown in Figure 1).

In addition to the above, the high pressure fluid also creates a gap 36 between the first and second membranes 16, 18 as the component 10 is expanded into the dies 28, 30.

It is important to note that during the expansion process, a gas path (not shown) links the cavities 34 to the gap 36. This ensures that the fluid pressure does not affect the membrane shape. As a result, the first and second membranes 16, 18 sit on top of the cavities 34 and protrusions 38 between neighbouring cavities, where the protrusions 38 are formed by the depressions 20 being blown out.

The membranes are aligned to and continue to follow the relative path of the external surfaces of the layers 12, 14. Where the component 10 is an aerofoil or other lift generating device these external surfaces correspond to the pressure and suction surfaces of the aerofoil. The space or gap, which is bounded by the membranes accordingly has flat external surfaces and its relative thickness can be determined by the height of the protrusions which can be easily set by the shape and size of the depressions 26 formed earlier in the manufacturing process.

With reference to Figure 1(d), once the component 10 is inflated by a high pressure fluid, the gap 36 is filled with a viscoelastic damping material 40. The damping material may be a polymer, for example a Huntsman™ syntactic damping paste or a similar product.

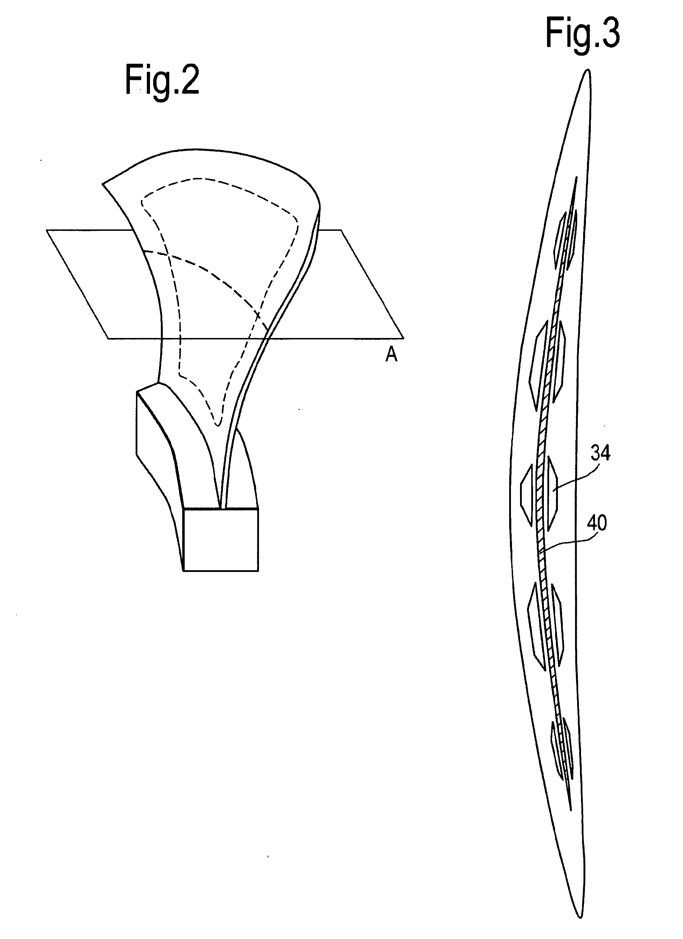

With reference to Figures 2 and 3 an example application for the component 10 is shown. In particular, the component 10 may be a blade for a turbomachine, for example a compressor fan blade. The first layer 12 and second layer 14 may form the suction and pressure surfaces of a blade respectively or vice-versa. The component 10 may be orientated so that the cavities 34 are disposed in a radial direction of the turbomachine blade. Alternatively, the component 10 may be orientated so that the cavities 34 are disposed in a circumferential direction. In either case, the assembly described above may be repeated in the chord-wise direction and/or span-wise direction.

The present invention exhibits the following advantages:
- It allows a component to exhibit the required thickness for stress and/or aerodynamic or other requirements, whilst having a thin core cavity for damping materials such as visco-elastic dampers.
- The gap thickness is very thin relative to the overall component thickness, thus reducing the centripetal shear load on the damping material in high speed rotating conditions.
- The reduction in gap thickness ensures maximum strain energy, generated from relative movement of the first and second layers, to be applied to the damping material. This maximises the damping effect.
- The core geometry allows the splines (i.e. protrusions 38) that separate the component outer layers and membranes to run in a radial direction, this allows them to carry a partial radial load in rotating conditions.
- The internal structure will aid the resistance to birdstrike conditions, when compared to a truly hollow blade.
- The component is very light as the remaining cavities may be filled with an inert gas or partial vacuum.
- The component is manufactured using previously-proposed processes.

Optional enhancements could be to form the component with an edge bead, which would help 'lock' the visco sheet into place. The gap, membrane and cavity thicknesses can be tailored to suit the application. The component could be used in high strength surfaces where noise reduction is also required, such as walls of armoured vehicles, centrifuge housings, cyclonic separator housings, etc.

## Claims

1. A method of manufacturing a component (10) by superplastic forming and diffusion bonding a first layer (12), a second layer (14), a first membrane (16), and a second membrane (18), the first and second membranes being disposed between the first and second layers with the first membrane adjacent the first layer and the second membrane adjacent the second layer, wherein the method comprises:
applying a stop-off material in a first predetermined pattern between the first layer and the first membrane so as to prevent a diffusion bond from forming between the first layer and the first membrane across regions defined by said first predetermined pattern;
applying the stop-off material in a second predetermined pattern between the second layer and the second membrane so as to prevent a diffusion bond from forming between the second layer and the second membrane across regions defined by said second predetermined pattern;
placing the first and second layers and the first and second membranes between appropriately shaped dies (28, 30); heating the first and second layers, the first and second membranes and dies; and supplying a pressurised fluid between the first layer and first membrane, first membrane and second membrane, and second membrane and second layer to cause at least one of the first and second layers and first and second membranes to be superplastically formed such that a space is provided between the first and second membranes.; and
providing a viscoelastic damping material (40) in the space (36) between the first and second membranes.

2. The method of manufacture according to claim 1, wherein the method further comprises applying the stop-off material between the first and second membranes so as to prevent a diffusion bond from forming across a substantial continuous portion between the first and second membranes.

3. The method of manufacture according to any preceding claim, wherein the method further comprises heating and pressing the first and second layers and the first and second membranes to diffusion bond the first and second layers and the first and second membranes together to form an integral structure.

4. The method according to any preceding claim, wherein the space between the first and second membrane is aligned with external surfaces of the layers on inflation.

5. The method of manufacture according to any preceding claim, wherein the method further comprises providing one or more depressions on an outer surface of one or more of the first and second layers.

6. The method of manufacture according to claim 5, wherein the first predetermined pattern of stop-off material overlaps with the one or more depressions in the first layer.

7. The method of manufacture according to any one of claims 5 and 6, wherein the method further comprises forming one or more of the first and second layers so that the outer surface depressions are at least partially filled in.

8. The method of manufacture according to any one of claims 5 to 7, wherein the method further comprises forming one or more of the first and second layers so that the outer surface depressions are filled in such that the outer surface has a substantially smooth finish.

9. The method of manufacture according to claim 7 or 8, wherein the outer surface depressions are filled in by material in the one or more of the first and second layers surrounding the depression such that corresponding recesses are formed on an inner surface of the one or more of the first and second layers.

10. The method of manufacture according to any preceding claim, wherein the method further comprises arranging one or more of the first and second predetermined patterns so that one or more cavities are formed between the first layer and first membrane and/or second layer and second membrane.

11. The method of manufacture according to any preceding claim, wherein the component is an aerofoil structure for a turbomachine.

12. An aerofoil structure for a turbomachine comprising a first layer, a second layer, a first membrane, and a second membrane, the first and second membranes being disposed between the first and second layers with the first membrane adjacent the first layer and the second membrane adjacent the second layer, wherein the component comprises:
one or more cavities between the first layer and first membrane and/or second layer and second membrane;
a space between the first and second membranes; and
a viscoelastic damping material provided in the space between the first and second membranes.

13. An aerofoil structure according to claim 12, wherein the space is aligned with outer surfaces of the first and second layers.

14. An aerofoil structure according to claim 12 or claim 13, wherein the space extends across a substantial continuous portion between the first and second membranes.

15. An aerofoil structure according to any one of claims 12 to 14, wherein the cavities are elongate with the length extending in a radial direction.
